# EUROPÄISCHE PATENTSCHRIFT

(11) **EP 3 315 316 B1**
(45) Veröffentlichungstag und Bekanntmachung des Hinweises auf die Patenterteilung: **23.12.2020**
(21) Anmeldenummer: 16196043.0
(22) Anmeldetag: 27.10.2016
(51) Int. Cl.: B44C 5/04, B32B 38/00, B41M 7/00, B44C 3/02

(54) **VERFAHREN ZUR HERSTELLUNG EINES DEKORIERTEN WAND- ODER BODENPANEELS**
METHOD FOR PRODUCING A DECORATED WALL OR FLOOR PANEL
PROCÉDÉ DE FABRICATION D'UN PANNEAU MURAL OU DE SOL DÉCORÉ

(43) Veröffentlichungstag der Anmeldung: 02.05.2018
(73) Patentinhaber: Akzenta Paneele + Profile GmbH, 56759 Kaisersesch (DE)
(72) Erfinder: HANNIG, Hans-Jürgen, 51427 Bergisch Gladbach (DE); HOFF, Egon, 56869 Mastershausen (DE)
(74) Vertreter: Michalski Hüttermann & Partner Patentanwälte mbB

(56) Entgegenhaltungen:
- WO-A1-2015/128255
- WO-A1-2015/158649
- DE-U1-202016 101 306
- US-A- 4 411 931
- US-A- 6 096 383
- US-B1- 6 888 147

## Beschreibung

Die vorliegende Erfindung betrifft ein Verfahren zur Herstellung eines dekorierten Wand- oder Bodenpaneels.

Solche dekorierten Platten sind an sich bekannt, wobei unter dem Begriff Wandpaneel auch Paneele zu verstehen sind, die zur Deckenbekleidung geeignet sind. Sie bestehen üblicherweise aus einem Träger oder Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Aminoplastharz imprägniert ist. Auch die Deckschicht und die übrigen Schichten werden meist aus Aminoplastharz hergestellt.

Aus dem Dokument US 6,888,147 B1 ist ein Verfahren zur Herstellung eines Paneels bekannt. Bei einem aus diesem Dokument bekannten Verfahren wird ein Dekor auf einen Kern aufgebracht, woraufhin das Dekor mit einer Lackschicht versehen wird.

WO 2015/128255 offenbart ein Verfahren zum Herstellen eines Dekorpaneels. Um einen besonders realistischen Wahrnehmungseindruck einer Strukturierung auch bei einer lackhaltigen Deckschicht erzeugen zu können, umfasst das Verfahren die Verfahrensschritte: a) Bereitstellen eines Trägers, b) Aufbringen eines Dekors auf zumindest einen Teilbereich des Trägers, c) Aufbringen einer lackhaltigen Deckschicht auf das Dekor, wobei das Verfahren dadurch gekennzeichnet ist, dass d) die lackhaltige Deckschicht teilgehärtet wird wobei d1) ein Teilhärten der Deckschicht realisiert wird unter Ausbildung eines Härtungsgradienten und wobei der Härtungsgradient in Richtung der Dicke der Deckschicht derart ausgebildet wird, dass ein Oberflächenbereich der Deckschicht vergleichsweise stärker gehärtet wird, als ein tiefergehender Bereich der Deckschicht, und wobei e) im Anschluss an das nur teilweise Härten der Deckschicht diese mit einer Strukturierung versehen wird, wobei f) Verfahrensschritt e) zumindest teilweise durch eine Negativstrukturierung erfolgt; und g) die lackhaltige Deckschicht nach Verfahrensschritt e) endgehärtet wird.

DE 20 2016 101306 U1 offenbart ein Trägermaterial zum Herstellen eines dekorierten Wand- oder Bodenpaneels sowie ferner ein Bodenpaneel, das ein derartiges Trägermaterial aufweist, sowie ein Verfahren zum Herstellen eines dekorierten Wand- oder Bodenpaneels.

US 6 888 147 B1 offenbart ein Verfahren zur Herstellung eines dekorativen Oberflächenelements, wobei das Element eine Basisschicht und eine dekorative obere Oberfläche umfasst. Ein strahlungshärtender Lack wird in einem vorbestimmten Muster als oberste Schicht auf der dekorativen oberen Oberfläche gedruckt. Der strahlungshärtende Lack bedeckt nur Teile der dekorativen oberen Oberfläche, wodurch der Lack Strahlung ausgesetzt wird, wodurch er aushärtet. Dadurch wird eine Oberflächenstruktur erreicht.

In bestimmten Anwendungsbereichen und insbesondere bei dem Erfordernis von stabilen und einfach herstellbaren Paneelen bieten die aus dem Stand der Technik bekannten Verfahren jedoch noch Verbesserungspotential.

Es ist daher die Aufgabe der vorliegenden Erfindung ein verbessertes Verfahren zur Herstellung von dekorierten Wand- oder Bodenpaneelen bereitzustellen.

Gelöst wird diese Aufgabe durch ein Verfahren gemäß Anspruch 1. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird somit ein Verfahren zur Herstellung eines dekorierten Wand- oder Bodenpaneels vorgeschlagen, aufweisend die Verfahrensschritte:
a) Bereitstellen eines plattenförmigen Trägers,
b) Aufbringen eines eine Dekorvorlage nachbildenden Dekors auf zumindest einen Teilbereich des plattenförmigen Trägers,
c) Aufbringen einer Deckschicht auf das Dekor, wobei die Deckschicht eine strahlungshärtende Verbindung aufweist, und
d) Härten der Deckschicht,
dadurch gekennzeichnet, dass die Deckschicht gehärtet wird unter Verwendung von zwei unmittelbar aufeinanderfolgenden Strahlern, wobei der erste Strahler Strahlung mit einer verglichen zu dem zweiten Strahler unterschiedlichen Wellenlänge aussendet, wobei der erste Strahler (58) eine Strahlung mit Strahlungsmaxima in einem Wellenlängenbereich von größer oder gleich 395nm bis kleiner oder gleich 445nm ausstrahlt und, wobei die Strahlungsintensität des ersten Strahlers zu der Strahlungsintensität des zweiten Strahlers in einem Verhältnis von größer oder gleich 0,75/1 bis kleiner oder gleich 1/0,75 steht.

Das vorbeschriebene Verfahren bietet gegenüber den Lösungen aus dem Stand der Technik signifikante Vorteile bieten.

Das vorbeschriebene Verfahren dient somit dem Ausbilden eines dekorierten Wand- oder Bodenpaneels. Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Das vorbeschriebene Verfahren weist dabei gemäß Verfahrensschritt a) auf das Bereitstellen eines plattenförmigen Trägers. Unter einem "plattenförmigen Träger" kann dabei im Sinne der vorliegenden Erfindung ein Naturstoff, wie etwa ein Holzwerkstoff, ein Faserwerkstoff oder ein Werkstoff umfassend einen Kunststoff verstanden werden, der in der Form einer Platte ausgebildet ist und dabei insbesondere als Kern beziehungsweise als Basislage des herzustellenden Paneels dienen kann. Beispielsweise kann der plattenförmige Träger dem Paneel bereits eine geeignete Stabilität verleihen oder zu dieser beitragen. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden.

Beispielsweise kann ein Träger auf Basis eines Naturwerkstoffs, eines Kunststoffes oder eines Holz-Kunststoff-Komposite-Werkstoffes (WPC) bereitgestellt werden. Auch Schichtstrukturen aus mehreren der genannten Materialien können verwendet werden, beispielsweise Gipskarton- oder Holz-Kunststoff-Schichtplatten.

Beispielsweise kann die Trägerplatte aus einem thermoplastischen, elastomeren oder duroplastischen Kunststoff ausgebildet sein. Auch Platten aus Mineralien wie natürliche und künstliche Steinplatten, Betonplatten, Gipsfaserplatten, so genannte WPC-Platten (aus einem Gemisch von Kunststoff und Holz), sowie Platten aus natürlichen Rohstoffen wie Kork und Holz können erfindungsgemäß als Träger eingesetzt werden. Auch Platten aus Biomasse als Naturwerkstoff wie Stroh, Maisstroh, Bambus, Laub, Algenextrakte, Hanf, Ölpalmenfasern, können erfindungsgemäß verwendet werden. Des Weiteren sind Recyclingwerkstoffe aus den genannten Materialien im Rahmen des erfindungsgemäßen Verfahrens einsetzbar.Ferner können die Platten auf Basis des Naturwerkstoffs Cellulose, wie etwa aus Papier oder Pappe ausgestaltet sein.

Holzwerkstoffe im Sinne der Erfindung sind dabei neben Vollholzwerkstoffen auch Materialien wie beispielsweise Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie beispielsweise Spanpressplatten, Strangpressplatten, Grobspanplatten (Oriented Structural Board, OSB) und Spanstreifenholz sowie auch Holzfaserwerkstoffe wie beispielsweise Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, beispielsweise mit Zement, gebundene Holzspanplatten bilden Holzwerkstoffe im Sinne der Erfindung. Auch Kork stellt dabei einen Holzwerkstoff im Sinne der Erfindung dar.

Im Sinne der Erfindung sind unter dem Begriff Faserwerkstoffe Materialien wie beispielsweise Papier und Vliese auf Basis pflanzlicher, tierischer, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind etwa keratinbasierte Materialien wie beispielsweise Wolle oder Rosshaar. Beispiele für mineralische Faserwerkstoffe sind aus Mineralwolle oder Glaswolle.

Weiterhin kann der Träger ein kunststoffbasierter Träger sein, also etwa einen Kunststoff aufweisen oder daraus bestehen. Beispiele für thermoplastische Kunststoffe sind Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein. Insbesondere kann es vorgesehen sein, dass das Trägermaterial ein Flammschutzmittel aufweist.

Insbesondere thermoplastische Kunststoffe bieten auch den Vorteil, dass die aus ihnen hergestellten Produkte sehr leicht rezykliert werden können. Es können auch Recycling-Materialien aus anderen Quellen verwendet werden. Hierdurch ergibt sich eine weitere Möglichkeit zur Senkung der Herstellungskosten.

Bevorzugt kann es sein, wenn der Träger ein kunststoffhaltiger Träger ist aufweisend ein Trägermaterial mit einem kunststoffhaltigen Matrixmaterial, in welches ein Feststoffmaterial insbesondere mit einer Partikelgröße von weniger oder gleich 600 µm eingebettet ist. Es kann weiterhin bevorzugt sein, dass das Matrixmaterial Polypropylen, etwa in Form von LDPE, umfasst, wobei das Polypropylen eine Mischung aus einem Homopolymer und einem Copolymer aufweisen kann. Mit Bezug auf die Verteilung von Homopolymer und Copolymer kann es bevorzugt sein, dass das Homopolymer bezogen auf das Polypropylen in einem Anteil von ≥ 10 Gew.-% bis ≤ 40 Gew.-%, beispielsweise in einem Anteil von ≥ 20 Gew.-% bis ≤ 30 Gew.-%, vorliegt, etwa in einem Anteil von ≥ 23 Gew.-% bis ≤ 28 Gew.-%, und/oder dass das Copolymer bezogen auf das Polypropylen in einem Anteil von ≥ 60 Gew.-% bis ≤ 90 Gew.-%, beispielsweise in einem Anteil von ≥ 70 Gew.-% bis ≤ 80 Gew.-%, etwa in einem Anteil von ≥ 72 Gew.-% bis ≤ 76 Gew.-%, vorliegt, insbesondere wobei das Polypropylen aus dem Homopolymer und dem Copolymer besteht.

Der Feststoff kann beispielsweise ein Holzwerkstoff, wie beispielsweise Holzmehl, oder ein anderes Material sein, wie etwa ein Bestandteil der Reispflanze, etwa der Reis-Spelz, der Reis-Stengel und die Reis-Schale, Zellulose oder ein mineralisches Material, wie etwa Steinmehl, Kreide oder andere anorganische mineralische Materialien. Besonders bevorzugt kann es sein, wenn der Feststoff aus Talkum gebildet wird, beispielsweise daraus besteht. Grundsätzlich können die Feststoffe die Form von Schnitzeln, Spänen Mehl oder Fasern vorliegen. Bezüglich der Verwendung von Talkum als Feststoff kann es von Vorteil sein, dass insbesondere in dieser Ausgestaltung eine hohe Stabilität ermöglicht werden kann. Darüber hinaus kann ein derartiges Trägermaterial eine verbesserte Feuchteresistenz ermöglichen, insbesondere mit einer reduzierten feuchte- oder hitzebedingten Quellung. Unter Talkum wird dabei in an sich bekannter Weise ein Magnesiumsilikathydrat verstanden, welches beispielsweise die chemische Summenformel Mg₃[Si₄O₁₀(OH)₂] aufweisen kann.

In einer besonders bevorzugten Ausgestaltung kann es dabei von Vorteil sein, dass das Feststoffmaterial zu wenigstens 50 Gew.-%, bezogen auf das Feststoffmaterial durch Talkum gebildet ist, wobei das Matrixmaterial in einer Menge, bezogen auf das Trägermaterial, von ≥ 30 Gew.-% bis ≤ 70 Gew.-%, beispielsweise von ≥ 35 Gew.-% bis ≤ 42 Gew.-% vorliegt und wobei das Feststoffmaterial, bezogen auf das Trägermaterial, in einer Menge, bezogen auf das Trägermaterial, von ≥ 30 Gew.-% bis ≤ 80 Gew.-%, beispielsweise von ≥ 65 Gew.-% bis ≤ 73 Gew.-% vorliegt, und wobei das Trägermaterial und das Feststoffmaterial gemeinsam, bezogen auf das Trägermaterial, in einer Menge von ≥ 95 Gew.-% vorliegen.

Grundsätzlich kann ein derartiger Träger bereitgestellt beziehungsweise ausgebildet werden wie dies für dekorative Paneele bekannt ist. Beispielsweise kann der Träger bereitgestellt werden aus einem granularen Ausgangsmaterial, welches unter Druck und Temperatur zu einem entsprechenden plattenförmigen Träger gepresst wird, wobei dieses Beispiel in keiner Weise beschränkend zu verstehen ist.

Weiterhin umfasst das Verfahren gemäß Verfahrensschritt b) das Aufbringen eines eine Dekorvorlage nachbildenden Dekors auf zumindest einen Teilbereich des plattenförmigen Trägers.

Unter einer "Dekorvorlage" kann dabei im Sinne der vorliegenden Erfindung insbesondere verstanden werden ein derartiger originaler Naturwerkstoff beziehungsweise zumindest eine Oberfläche eines solchen, der durch das Dekor imitiert beziehungsweise nachempfunden werden soll. Das Aufbringen des Dekors kann beispielsweise erfolgen durch das Aufbringen eines bedruckten Papiers oder eines unbedruckten oder teilweise bedruckten Papiers, welches anschließend bedruckt wird. Alternativ kann das Dekor unmittelbar auf den Träger beziehungsweise einen geeigneten Druckuntergrund gedruckt werden, wie dies nachstehend beschrieben ist.

Um ein Dekor aufzubringen, kann zunächst ein Dekoruntergrund auf zumindest einen Teilbereich des Trägers aufgebracht werden. Beispielsweise kann zunächst ein Primer insbesondere für Druckverfahren als Dekoruntergrund aufgebracht werden, etwa in einer Dicke von ≥ 10µm bis ≤ 60 µm. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden.

Neben der Verwendung eines Primer ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann. Ferner kann auf das Papier ein Harz als Druckuntergrund aufgebracht werden, welche als Harzkomponente wenigstens eine Verbindung aufweisen kann ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser. Der Primer kann im erfindungsgemäßen Verfahren bevorzugt mittels Gummiwalzen, Gießmaschine, durch Aufsprühen auf die Trägerplatte aufgebracht werden. Bevorzugt wird der Primer in einer Menge zwischen ≥1 g/m² und ≤100 g/m², vorzugsweise zwischen ≥10 g/m² und ≤50 g/m², insbesondere zwischen ≥20 g/m² und ≤40 g/m² aufgetragen. Im Anschluss an den Auftrag des Primers auf die Trägeroberfläche erfolgt eine Bestrahlung mit einer Strahlungsquelle geeigneter Wellenlänge.

Alternativ oder zusätzlich zu dem Primer, beispielsweise auf den Primer, kann ferner ein Haftgrund unmittelbar auf den Träger oder auf den Primer aufgebracht werden. Für ein optisch besonders qualitativ hochwertiges Dekorbild kann beispielsweise ein weiß gefärbter Haftgrund aufgebracht werden, der etwa weiße Farbpigmente aufweisen kann. Beispielsweise kann der Haftgrund in zwei Schichten aufgebracht werden. Besonders bevorzugt kann es sein, dass der Haftgrund strahlungshärtbar, beispielsweise UV-härtbar ist. Dann kann eine erste Lage Haftgrund bevorzugt vor dem Auftragen einer weiteren Lage Haftgrund und/oder vor dem Aufdrucken des Dekors gehärtet werden. Beispielsweise kann der Haftgrund Polyurethan aufweisen, etwa als Polyurethanlack ausgestaltet sein, und etwa mit weißen Pigmenten versehen sein.

Gemäß einer weiteren Ausgestaltung des Verfahrens kann das Dekor beziehungsweise kann die Dekorschicht durch Direktdruck aufgebracht werden. Unter dem Begriff "Direktdruck" kann im Sinne der Erfindung das Aufbringen eines Dekors direkt auf den Träger eines Paneels oder auf eine auf dem Träger aufgebrachte nicht bedruckte Faserwerkstoffschicht verstanden werden. Entgegen den konventionellen Verfahren, bei welchen auf einen Träger eine zuvor bedruckte Dekorschicht aufgebracht wird, erfolgt beim Direktdruck das Aufdrucken des Dekors unmittelbar im Zuge der Paneelherstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren beziehungsweise Tintenstrahldruck-Verfahren oder Laserdruck-Verfahren eingesetzt werden. Die vorgenannten Druckverfahren sind dabei besonders ausgereift und insbesondere für eine Paneel-Herstellung vorteilhaft geeignet, um ein detailgetreues Dekor vorlagenidentisch aufbringen zu können. Dabei ist im Sinne der Erfindung unter Direktdruck auch das Aufbringen des Dekores mittels Drucktechniken auf eine zuvor auf den Träger aufgebrachte bedruckbare Schicht zu verstehen. Eine solche bedruckbare Schicht kann beispielsweise durch eine flüssig aufgetragene und anschließend ausgehärtete Primerschicht oder auch eine zuvor aufgebrachte bedruckbare Folien-, Papier- oder Vliesschicht ausgebildet sein.

Insbesondere ein Digitaldruckverfahren kann dabei für das vorbeschriebene Verfahren geeignet sein, da die dreidimensionalen Dekordaten bevorzugt in elektronischer Form beziehungsweise in digitaler Form bereitgestellt werden. Dies kann beispielsweise gelten sowohl für in einer Datenbank gespeicherte Daten, als auch für in-situ durch einen dreidimensionalen Scanner ermittelte Daten. Somit können die bereitgestellten Dekordaten insbesondere durch Digitaldruckverfahren ohne weitere Zwischenschritte unmittelbar verwendbar sein, was das Verfahren insbesondere in dieser Ausgestaltung mit besonders wenig Aufwand und kostengünstig anwendbar macht. Darüber hinaus ist es durch das Verwenden von Digitaldruckverfahren möglich, jeden Druckvorgang individuell ausführen zu können, so dass eine besonders große Anwendungsbreite und dabei dynamische Anpassung an das gewünschte Produkt möglich ist.

Die Dekorschicht beziehungsweise das Dekor kann aus einer insbesondere strahlungshärtbaren Farbe und/oder Tinte ausgebildet werden. Beispielsweise kann eine UVhärtbare Farbe oder Tinte verwendet werden.

Es kann ferner gegebenenfalls zunächst etwa vor dem Bedrucken ein Vorbehandeln des Trägers zur elektrostatischen Entladung und gegebenenfalls anschließender elektrostatischer Beladung erfolgen. Dies kann insbesondere dazu dienen, das Auftreten von Unschärfen im Laufe der Dekoraufbringung zu vermeiden.

Gemäß einer weiteren Ausgestaltung des Verfahrens können die Dekorschichten beziehungsweise kann das Dekor jeweils in einer Dicke in einem Bereich von ≥ 5µm bis ≤ 10µm aufgebracht werden. Beispielsweise können die Dekorschichten jeweils in einer Dicke in einem Bereich von 8µm aufgebracht werden. Insbesondere in dieser Ausgestaltung beziehungsweise mit derartigen Dicken der Einzel-Dekorschichten kann durch eine besonders dünne Ausgestaltung der Dekorschichten und damit einer höchstpräzisen Variabilität des Flächenauftrags beziehungsweise der Abdeckung einer Schicht durch die jeweils aufgebrachte Dekorschicht ein besonders vorlagenidentischer Eindruck des Dekors beziehungsweise des Paneels erzielt werden. Dekorvorlage beziehungsweise an das gewünschte Produkt anpassen zu können.

Anschließend erfolgt gemäß Verfahrensschritt c) das Aufbringen einer Deckschicht auf das Dekor, wobei die Deckschicht eine strahlungshärtende Verbindung aufweist. Unter einer Schutz- beziehungsweise Deckschicht kann dabei insbesondere eine derartige Schicht verstanden werden, welche darunter liegende Schichten vor Verschleiß schützt und welche ferner zum Aufnehmen einer Struktur dienen kann. Insbesondere ist eine oder ist eine Mehrzahl an Deckschichten auf dem Dekor vorgesehen, um dieses zu schützen. Die Ausgestaltung der Deckschicht beziehungsweise der Deckschichten ist nachstehend im Detail beschrieben.

Die Deckschicht kann einen Acrylat-basierten Lack aufweisen. Insbesondere kann die Deckschicht ein oder mehrere Acrylate aufweisen, die insbesondere modifiziert sein können durch Polyurethan (PU) beziehungsweise können Acrylat-/Polyurethan-Systeme Verwendung finden. Darüber hinaus kann es vorgesehen sein, dass die Deckschicht als Lack, etwa als strahlungshärtebare oder zumindest teilweise strahlungshärtebare Zusammensetzung, beispielsweise auf Basis eines Epoxid-Lackes, oder eines Urethanacrylates verwendet wird. Insbesondere derartige Lacksysteme können eine besonders kratz- und stoßfeste Deckschicht ausbilden, was das herzustellende Dekorpaneel besonders widerstandsfähig machen kann. Dabei wird es insbesondere durch die vorliegende Erfindung möglich, derartige Lacksysteme mit einer Negativstrukturierung zu versehen, um so einen besonders hochwertigen Struktureindruck mit den Vorteilen der Lackschicht zu ermöglichen.

Dabei kann die Deckschicht beispielsweise eine Schichtdicke zwischen ≥ 100µm und ≤ 5mm, vorzugsweise zwischen ≥ 0,5mm und ≤ 2,5µm aufweisen.

Beispielsweise kann es vorgesehen sein, dass zwei Deckschichten vorgesehen sind, beziehungsweise dass die Deckschicht zweischichtig ausgestaltet ist. Dabei können die Schichten aus dem gleichen Material, insbesondere Lack, oder aus verschiedenen Materialien, wie insbesondere aus verschiedenen Lacken, gefertigt sein. Dabei kann eine untere Schutzschicht eine Struktur aufweisen und die obere Schutzschicht die untere Schutzschicht bedecken. In dieser Ausgestaltung kann es vorgesehen sein, dass die untere Schicht beim Auftrag eine vergleichsweise höhere Viskosität aufweist, um Strukturen auch vor dem Härten stabil halten zu können, und/oder dass die obere Schicht eine vergleichsweise niedrige Viskosität aufweist, um einen einheitlichen Abschluss bilden zu können. Ferner kann es vorgesehen sein, dass die untere Schicht eine größere Dicke aufweist, als die obere Schicht. So kann die untere Schicht, die als Strukturlack dienen kann, etwa in einer Auftragsmenge von ≥ 30 g/m² bis ≤ 40 g/m² aufgetragen sein, wohingegen die obere Schicht, die als Decklack dienen kann, etwa in einer Auftragsmenge von ≥ 10 g/m² bis ≤ 15 g/m² aufgetragen sein kann.

Es kann vorgesehen sein, dass die Deckschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann es vorgesehen sein, dass der Hartstoff in einer Menge zwischen 5 Gew.-% und 40 Gew.-%, vorzugsweise zwischen 15 Gew.-% und 25 Gew.-% in der Verschleißschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafter Weise erreicht, dass die Deckschichtzusammensetzung eine stabile Dispersion ausbildet und eine Entmischung bzw. ein Absetzten des Hartstoffes in der Verschleißschichtzusammensetzung vermieden werden kann.

Zur Ausbildung einer entsprechenden Deckschicht kann es in einer Ausgestaltung vorgesehen sein, dass die Hartstoff enthaltende und strahlungshärtbare Zusammensetzung in einer Konzentration zwischen 10 g/m² und 250 g/m², vorzugsweise zwischen 25 g/m² und 100g/m² aufgetragen wird. Dabei kann die Auftragung beispielsweise mittels Walzen, wie Gummiwalzen oder mittels Gießvorrichtungen aufgetragen werden.

Dabei kann es vorgesehen sein, dass der Hartstoff zum Zeitpunkt des Auftrages der Deckschichtzusammensetzung nicht in der Zusammensetzung enthalten ist, sondern als Partikel auf die aufgetragenen Deckschichtzusammensetzung aufgestreut wird und diese im Anschluss strahlungsinduziert gehärtet wird.

Insbesondere kann in die Deckschicht eine Strukturierung, insbesondere eine mit dem Dekor übereinstimmende Oberflächenstrukturierung durch das Einbringen von Poren eingebracht werden, was auch als Synchronpore bezeichnet wird. Dies kann beispielsweise realisierbar sein durch eine sogenannte Negativstrukturierung, indem die Deckschicht mittels einem Prägemittel, wie einem Prägestempel oder einer Prägewalze, mit einer Struktur versehen wird, indem diese in die Deckschicht eingepresst wird. Hierzu kann die Deckschicht zunächst teilgehärtet werden, anschließend mit einer Struktur versehen werden und weiter anschließend endgehärtet werden.

Bei dem Ausbilden der Deckschicht mit Lacken kann die Struktur ferner eingebracht werden durch eine sogenannte Positivstrukturierung, bei welcher die Strukturen aufgebaut werden durch das Aufbringen einer Lackschicht und dabei insbesondere durch das selektive Aufbringen der erhabenen Bereiche der Struktur. Dies wird oftmals realisiert durch negativ strukturierte Prägemittel, welche die Lackschicht entsprechend aufbringen können.

Ferner kann eine Positivstrukturierung erfolgen durch das Drucken einer Struktur, etwa unter gegebenenfalls mehrschichtigem Aufdrucken eines Lackes. Somit kann es vorteilhaft vorgesehen sein, dass Verfahrensschritt c) zumindest teilweise durch ein Digitaldruckverfahren erfolgt. In dieser Ausgestaltung kann somit auf besonders vorteilhafte Weise eine Struktur aufgebracht werden. Denn durch das Drucken einer Struktur kann diese höchstgenau und dabei besonders vorteilhaft als Synchronpore in Übereinstimmung mit dem Dekor aufgebracht werden. Hierzu können beispielsweise zu dem Drucken des Dekors entsprechende dreidimensionale Dekordaten Verwendung finden, um ein bezüglich einer Dekorvorlage möglichst identisches oder nahezu identisches optisches Erscheinungsbild mit entsprechender haptischer Struktur zu ermöglichen. Das Aufdrucken kann dabei etwa erfolgen mittels eines Tintenstrahldruckers oder eines Laserdruckers.

Dabei kann es von Vorteil sein, wenn die Struktur nicht unmittelbar auf das Dekor gedruckt wird, sondern etwa unterhalb der Strukturschicht wenigstens eine, beispielsweise zwei weitere Schichten der Deckschicht beziehungsweise Schutzschicht angeordnet sind. Diese Schicht oder Schichten können in an sich bekannter Weise etwa durch einen Walzenauftrag oder ähnliches aufgebracht werden. Dabei kann es möglich sein, die einzelnen Schichten unterhalb der Struktur zu härten, etwa unter Verwendung zweiter Strahler, wie dies mit seinen Ausgestaltungen im Detail beschrieben ist, bevor die Struktur aufgedruckt wird. Beispielsweise kann eine erste Schicht einer abriebfesten Schicht aufgebracht werden, diese gehärtet werden, und eine weitere abriebfeste Schicht aufgebracht und gehärtet werden, bevor die Struktur aufgedruckt wird. Die abriebfesten Schichten beziehungsweise Deckschichten können dabei wie vorstehend ausgeführt mit abriebfesten Partikeln versehen sein.

Grundsätzlich kann es vorgesehen sein, das die Deckschicht, und damit einzelne, mehrere oder sämtliche Lagen der Deckschicht, mit abriebfesten Partikeln versehen wird.

Vor dem Aufbringen der abriebfesten Schichten kann auf das Dekor ein Haftgrund aufgebracht werden. Beispielsweise kann ein UV-härtbarer Haftgrund aufgebracht werden. Als Haftgrund kann beispielsweise verwendet werden ein insbesondere UV-härtendes Lacksystem, wie etwa ein Acrylat-basiertes Lacksystem.

Auch die gedruckte Struktur der Deckschicht kann dabei durch eine Mehrzahl an Strahleinheiten gehärtet werden. Die Härtung mit unterschiedlichen Wellenlängen kann dabei besonders vorteilhaft sein, da so eine besonders schnelle und effektive Härtung erfolgen kann, was bezüglich der Stabilität der aufgedruckten Struktur und damit der Langzeitstabilität beziehungsweise der Abriebfestigkeit des erzeugten Paneels von Vorteil sein kann. Beispielsweise kann die Struktur gedruckt werden durch einen Mehrfachauftrag, wobei jede der Schichten vor dem Aufbringen einer weiteren Schicht gehärtet werden kann.

Insbesondere dann, wenn eine Struktur unter Verwendung eines Lackes gedruckt wird, wobei eine oder mehrere abriebfeste Schichten beziehungsweise Deckschichten unterhalb der gedruckten Struktur angeordnet sind, kann es von Vorteil sein, auf der gedruckten Struktur eine Abschlussschicht auf die gedruckte Struktur aufzubringen. Diese Schicht kann wiederum durch einen Lack, wie etwa einen Acryllack, gebildet werden, der durch herkömmliche Verfahren aufgebracht werden kann. Diese Abschlussschicht kann die Stabilität des Schichtaufbaus weiter verbessern und ferner das Erscheinungsbild der Struktur weiter verbessern.

Grundsätzlich kann es vorgesehen sein, dass sämtliche Schichten oberhalb des Dekors UV-härtbar sind und vor dem Aufbringen einer weiteren Schicht gehärtet werden, insbesondere unter Verwendung einer Mehrzahl von Strahlern beziehungsweise einer Mehrzahl von Wellenlängen, wie dies an anderer Stelle im Detail beschrieben ist. Darüber hinaus können einzelne oder sämtliche der Schichten abriebfeste Partikel aufweisen.

Dabei ist es ohne weitere Schritte problemlos und hochgenau möglich, eine mit dem Dekorbild übereinstimmende Oberflächenstrukturierung zu erzeugen. Unter einer mit dem Dekorbild übereinstimmenden Oberflächenstrukturierung ist zu verstehen, dass die Oberfläche des Dekorpaneels eine haptisch wahrnehmbare Struktur aufweist, welche ihrer Form und ihrem Muster der Optik des aufgebrachten Dekors entspricht, um so eine möglichst originalgetreue Nachbildung eines natürlichen Werkstoffes auch hinsichtlich der Haptik zu erhalten.

Bei dem vorbeschriebenen Verfahren ist es weiterhin vorgesehen, dass die Deckschicht gehärtet wird unter Verwendung eines ersten Strahlers und eines zweiten Strahlers, wobei der erste Strahler Strahlung mit einer verglichen zu dem zweiten Strahler unterschiedlichen Wellenlänge aussendet. Insbesondere dieser Verfahrensschritt kann Vorteile gegenüber den Lösungen aus dem Stand der Technik bieten.

Dadurch, dass Deckschicht gehärtet wird unter Verwendung eines ersten Strahlers und eines zweiten Strahlers, wobei der erste Strahler Strahlung mit einer verglichen zu dem zweiten Strahler unterschiedlichen Wellenlänge aussendet, kann das Aushärteverhalten der Deckschicht deutlich verbessert werden. Im Detail kann durch ein derartiges Härtungsverfahren mit wenigstens zwei unterschiedlichen Wellenlängen eine verbesserte Durchhärtung ermöglichen. Dadurch kann gegebenenfalls die Einwirkdauer der Strahlung verkürzt werden, was Prozesszeiten optimieren kann.

Darüber hinaus kann eine verbesserte Durchhärtung es ermöglichen, dass die Deckschicht eine erhöhte Stabilität aufweist, so dass während eines Transports oder Gebrauchs Beschädigungen minimiert werden können. Dadurch kann es weiter ermöglicht werden, dass in die Deckschicht eingebrachte Strukturen auch bei hoher Beanspruchung erhalten bleiben, was den optischen Eindruck auch nach intensivem Gebrauch verbessern kann.

Darüber hinaus wurde in überraschender Weise gefunden, dass durch das vorbeschriebene Verfahren eine verbesserte Anhaftung der Deckschicht an dem darunter liegenden Dekor ermöglicht werden kann. Auch dadurch kann die Stabilität des Paneels weiter verbessert werden, was zu den vorgenannten Vorteilen führen kann.

Unter jeweils einer Strahlung mit unterschiedlichen Wellenlängen kann dabei insbesondere verstanden werden eine erste Strahlung und eine zweite Strahlung, welche Strahlungsmaxima an wenigstens einer unterschiedlichen Position aufweisen. Beispielsweise können Muster der Strahlungsmaxima vorliegen, welche sich vollständig oder wenigstens zum Teil anhand der Position beziehungsweise der Wellenlänge und/oder gegebenenfalls der Intensität unterschieden.

Erfindungsgemäß strahlt der erste Strahler eine Strahlung mit Strahlungsmaxima in einem Wellenlängenbereich von größer oder gleich 395nm bis kleiner oder gleich 445nm aus. Zusätzlich kann es vorgesehen sein, dass der zweite Strahler eine Strahlung mit Strahlungsmaxima in einem Wellenlängenbereich von größer oder gleich 200nm bis kleiner oder gleich 440nm ausstrahlt. Es hat sich in überraschender Weise gezeigt, dass eine Kombination der vorgenannten Strahler, die Vorteile hinsichtlich der Prozessführung und der Stabilität des erhaltenen Produkts verbessern können.

Als nicht beschränkendes Beispiel kann es dabei vorgesehen sein, dass der erste Strahler ein Galliumstrahler ist und dass der zweite Strahler ein Quecksilberstrahler ist. Insbesondere eine Kombination eines Galliumstrahlers und eines Quecksilberstrahlers kann es ermöglichen, dass die vorgenannten Wellenlängenbereiche eingehalten werden und so die Vorteile hinsichtlich der Prozessführung und der Stabilität des erhaltenen Produkts realisiert werden.

Es ist erfindungsgemäß vorgesehen, dass die Strahlungsintensität des ersten Strahlers zu der Strahlungsintensität des zweiten Strahlers in einem Verhältnis liegt von größer oder gleich 0,75/1 bis kleiner oder gleich 1/0,75. Dadurch kann eine im Wesentlichen gleichmäßige Strahlungsintensität der beiden Strahler ermöglicht werden, was das Härtungsergebnis weiter verbessern kann. Bevorzugt kann es vorgesehen sein, dass die Strahlungsintensität des ersten Strahlers zu der Strahlungsintensität des zweiten Strahlers in einem Verhältnis liegt von größer oder gleich 0,9/1 bis kleiner oder gleich 1/0,9. Weiterhin kann es bevorzugt sein, dass die Einwirkdauer, etwa bei einer Verfahrgeschwindigkeit des Trägers bei dem Härten von 25-35m/s in einem Zeitraum von ungefähr einer Sekunde liegt, so dass abhängig von einem grundsätzlich variablen Strahlungsfokus eine Einwirkdauer der Gesamtstrahlung auf eine Position von kleiner als 1 Sekunde ausreichend sein kann.

Weiterhin kann es bevorzugt sein, dass der erste Strahler und der zweite Strahler derart ausgerichtet sind, dass die Strahlung des ersten Strahlers und die Strahlung des zweiten Strahlers zumindest teilweise auf unterschiedliche Positionen der Deckschicht fallen, die Deckschicht somit zunächst von dem ersten Strahler und anschließend von dem zweiten Strahler behandelt wird. Dabei kann es vorgesehen sein, dass der erste Strahler und der zweite Strahler derart ausgerichtet sind, dass die Strahlung des ersten Strahlers und die Strahlung des zweiten Strahlers vollumfänglich auf unterschiedliche Positionen der Deckschicht fallen, oder dass der erste Strahler und der zweite Strahler derart ausgerichtet sind, dass die Strahlung des ersten Strahlers und die Strahlung des zweiten Strahlers teilweise auf unterschiedliche Positionen der Deckschicht fallen und teilweise auf eine identische Position der Deckschicht fallen, etwa durch Streuung der Strahlung. In dieser Ausgestaltung kann somit die Deckschicht zunächst von Strahlung einer Wellenlänge gehärtet werden und anschließend von Strahlung einer weiteren Wellenlänge. Es hat sich in überraschender Weise gezeigt, dass auch diese Ausgestaltung Vorteile bezüglich der Härtung erlauben kann. Insbesondere kann die Behandlung mit unterschiedlichen Wellenlängen bezogen auf die jeweilige Wellenlänge spezifischer sein, was die Härtung bezüglich des jeweiligen Anwendungsgebiets, also etwa bezüglich der spezifischen Zusammensetzung der Deckschicht, anpassbarer gestalten kann. Insbesondere in dieser Ausgestaltung kann es vorgesehen sein, dass die Deckschicht zunächst mit einer Strahlung mit Strahlungsmaxima in einem Wellenlängenbereich von größer oder gleich 395nm bis kleiner oder gleich 445nm und anschließend mit Strahlung mit Strahlungsmaxima in einem Wellenlängenbereich von größer oder gleich 200nm bis kleiner oder gleich 440nm behandelt wird. Beispielsweise kann die Deckschicht zunächst von einem Galliumstrahler und anschließend von einem Quecksilberstrahler behandelt wird. Es hat sich in überraschender Weise herausgestellt, dass insbesondere in dieser Ausgestaltung eine besonders bevorzugte Härtung erfolgen kann.

Weiterhin kann es vorteilhaft sein, dass der erste Strahler und der zweite Strahler derart ausgerichtet sind, dass die Strahlung des ersten Strahlers und die Strahlung des zweiten Strahlers zumindest teilweise auf eine identische Position der Deckschicht fallen. In dieser Ausgestaltung kann es somit vorgesehen sein, dass die Deckschicht zumindest teilweise zeitgleich von dem ersten Strahler und dem zweiten Strahler beziehungsweise der entsprechenden Strahlung des ersten Strahlers und des zweiten Strahlers behandelt wird. Beispielsweise kann die Strahlung des ersten Strahlers und des zweiten Strahlers vollständig auf den selben Bereich der Deckschicht fallen. In dieser Ausgestaltung kann die Härtung besonders schnell möglich sein, was kurze Prozesszeiten und dadurch eine kostengünstige Herstellung ermöglichen kann.

Die Erfindung ist nachfolgend anhand der Figuren sowie eines Ausführungsbeispiels weiter erläutert.
Fig. 1 zeigt schematisch eine Ausgestaltung eines Verfahrens zum Herstellen eines dekorierten Paneels;
Fig. 2 zeigt eine detaillierte Ansicht einer Strahlungseinheit in einer ersten Ausgestaltung; und
Fig. 3 zeigt eine detaillierte Ansicht einer Strahlungseinheit in einer weiteren Ausgestaltung.

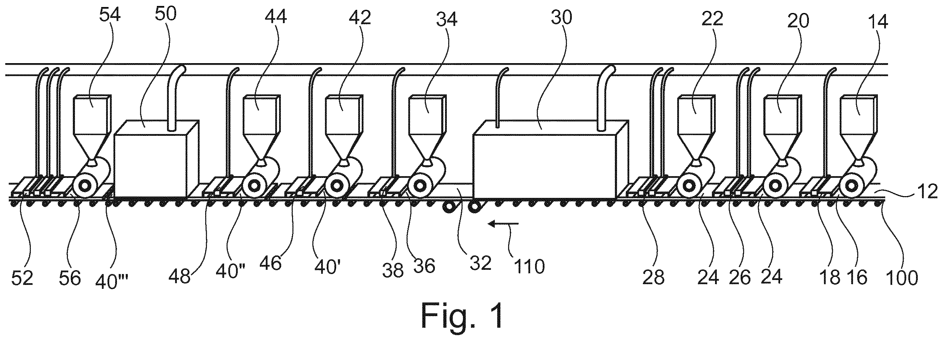

In der Figur 1 ist ein Verfahren zur Herstellung eines dekorierten Wand- oder Bodenpaneels 10 schematisch dargestellt.

Dabei ist eine Fördereinrichtung 100 gezeigt, auf welcher ein Zwischenprodukt aufweisend einen Träger 12 in Richtung des Pfeils 110 gefördert wird. Der Träger 12 kann dabei in an sich bekannter Weise bereitgestellt werden und grundsätzlich aus einem geeigneten Material geformt sein.

Dabei ist es zunächst vorgesehen, dass durch eine Auftrageinrichtung 14 ein Primer 16 auf den Träger 12 aufgebracht wird. Der Primer 16 kann UV-härtbar sein und durch die Strahleinheit 18 gehärtet werden. Im Anschluss an das Aufbringen des Primer 16 kann durch die Auftrageinrichtungen 20, 22 ein zweilagiger Haft-Weißgrund 24 aufgebracht werden. Der Haft-Weißgrund 24 kann wiederum UV-härtbar sein und durch die Strahleinheit 26, 28 gehärtet werden, insbesondere nach dem Aufbringen jeder Lage.

Der Primer 16 beziehungsweise der Haft-Weißgrund 24 dient als Druckuntergrund. Somit erfolgt unter Verwendung einer Digitaldruckeinheit 30 ein Bedrucken des Trägers 12 unter Ausbildung eines Dekors 32.

Anschließend kann durch eine weitere Auftrageinheit 34 ein insbesondere UV-härtbarer Haftgrund 36 aufgebracht und durch die Strahleinheit 38 gehärtet werden. Der Haftgrund 36 dient dem Untergrund einer Deckschicht 40. Dabei kann die Deckschicht 40 eine Mehrzahl von Lagen 40', 40" insbesondere aufweisend einen strahlungshärtenden Lack aufweisen, welche durch Auftrageinrichtungen 42, 44 aufgebracht werden können und nach dem Aufbringen durch Strahleinheiten 46, 48 gehärtet werden können.

Weiterhin umfasst die Deckschicht 40 eine weitere Lage 40'", welche eine Struktur insbesondere im Sinne einer Synchronpore aufweist. Hierzu ist eine weitere Digitaldruckeinheit 50 vorgesehen, welche die Lage 40'" im Sinne einer Positivstrukturierung aufdruckt, um so eine definierte Struktur zu erzeugen. Anschließend kann die Lage 40'" unmittelbar gehärtet werden durch die Strahleinheit 52, oder es kann durch die Auftrageinheit 54 eine Abschlussschicht 56 aufgebracht werden und anschließend eine Härtung erfolgen.

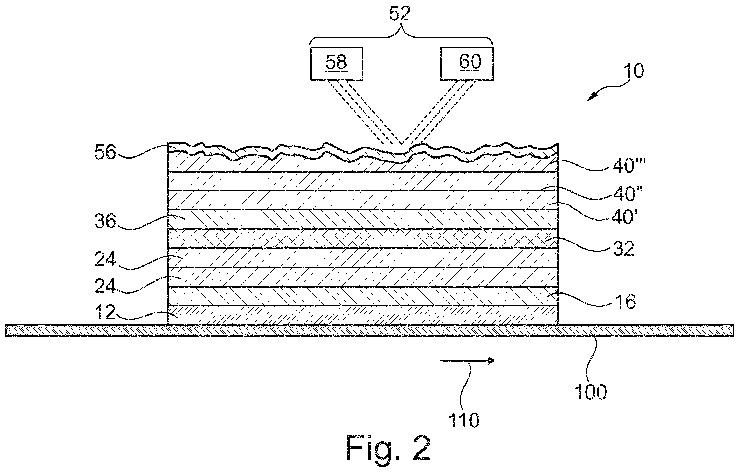

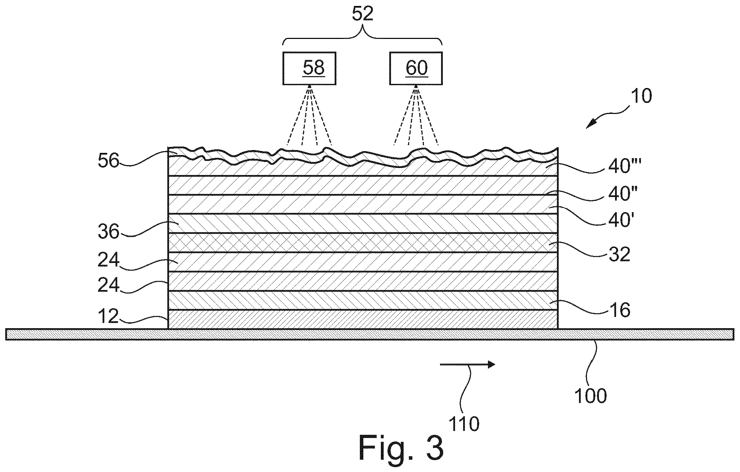

In den Figuren 2 und 3 ist jeweils eine Ausgestaltung der Strahlungseinheit 52 gezeigt, wobei die hier gemachten Ausführungen grundsätzlich für jede der beschriebenen Strahlungseinheiten 16, 26, 28, 38, 46, 48 gelten können. Besonders bevorzugt können die gezeigten Ausführungen neben der Strahlungseinheit 52 für die Strahlungseinheiten 18, 26 und 28 dienen.

Es ist zu erkennen, dass zur Härtung der Deckschicht 40, wie etwa der als Strukturlage zu bezeichneten Lage 40'" die Strahlungseinheit 52 einen ersten Strahler 58 und einen zweiten Strahler 60 aufweist, wobei vorgesehen ist, dass der erste Strahler 58 Strahlung mit einer verglichen zu der Strahlung des zweiten Strahlers 60 unterschiedlichen Wellenlänge aussendet. Insbesondere ist der erste Strahler 58 ein Galliumstrahler und ist der zweite Strahler 60 ein Quecksilberstrahler. Durch das Vorsehen des ersten Strahlers 58 und des zweiten Strahlers 60 kann eine besonders vorteilhafte Härtung realisiert werden.

Gemäß Figur 2 ist es dabei vorgesehen, dass der erste Strahler 58 und der zweite Strahler 60 derart ausgerichtet sind, dass die Strahlung des ersten Strahlers 58 und die Strahlung des zweiten Strahlers 60 zumindest teilweise auf eine identische Position der Deckschicht 40 fallen.

Eine bevorzugte Ausgestaltung ist in Figur 3 gezeigt, wonach der erste Strahler 58 und der zweite Strahler 60 derart ausgerichtet sind, dass die Strahlung des ersten Strahlers 58 und die Strahlung des zweiten Strahlers 60 zumindest teilweise auf unterschiedliche Positionen der Deckschicht 40 fallen.

### Bezugszeichen

- 10: Wand- oder Bodenpaneel
- 12: Träger
- 14: Auftrageinrichtung
- 16: Primer
- 18: Strahleinheit
- 20: Auftrageinrichtung
- 22: Auftrageinrichtung
- 24: Haft-Weißgrund
- 26: Strahleinheit
- 28: Strahleinheit
- 30: Digitaldruckeinheit
- 32: Dekor
- 34: Auftrageinrichtung
- 36: Haftgrund
- 38: Strahleinheit
- 40: Deckschicht
- 40': Lage der Deckschicht
- 40": Lage der Deckschicht
- 40'": Lage der Deckschicht
- 42: Auftrageinrichtung
- 44: Auftrageinrichtung
- 46: Strahleinheit
- 48: Strahleinheit
- 50: Digitaldruckeinheit
- 52: Strahleinheit
- 54: Auftrageinrichtung
- 56: Abschlussschicht
- 58: Strahler
- 60: Strahler
- 100: Fördereinrichtung
- 110: Pfeil

## Patentansprüche

1. Verfahren zur Herstellung eines dekorierten Wand- oder Bodenpaneels (10), aufweisend die Verfahrensschritte:
a) Bereitstellen eines plattenförmigen Trägers (12),
b) Aufbringen eines eine Dekorvorlage nachbildenden Dekors (32) auf zumindest einen Teilbereich des plattenförmigen Trägers (12),
c) Aufbringen einer Deckschicht (40) auf das Dekor (32), wobei die Deckschicht (40) eine strahlungshärtende Verbindung aufweist,
d) Härten der Deckschicht (40),
**dadurch gekennzeichnet, dass** die Deckschicht (40) gehärtet wird unter Verwendung von zwei unmittelbar aufeinanderfolgenden Strahlern, wobei der erste Strahler (58) Strahlung mit einer verglichen zu Strahlung des zweiten Strahlers (60) unterschiedlichen Wellenlänge aussendet, wobei der erste Strahler (58) eine Strahlung mit Strahlungsmaxima in einem Wellenlängenbereich von größer oder gleich 395nm bis kleiner oder gleich 445nm ausstrahlt und, wobei die Strahlungsintensität des ersten Strahlers zu der Strahlungsintensität des zweiten Strahlers in einem Verhältnis von größer oder gleich 0,75/1 bis kleiner oder gleich 1/0,75 steht.

2. Verfahren nach Anspruch 1, **dadurch gekennzeichnet, dass** der zweite Strahler (60) eine Strahlung mit Strahlungsmaxima in einem Wellenlängenbereich von größer oder gleich 200nm bis kleiner oder gleich 440nm ausstrahlt.

3. Verfahren nach einem der vorhergehenden Ansprüche, **dadurch gekennzeichnet, dass** der erste Strahler (58) und der zweite Strahler (60) derart ausgerichtet sind, dass die Strahlung des ersten Strahlers (58) und die Strahlung des zweiten Strahlers (60) zumindest teilweise auf unterschiedliche Positionen der Deckschicht (40) fallen.

4. Verfahren nach einem der Ansprüche 1 oder 2, **dadurch gekennzeichnet, dass** der erste Strahler (58) und der zweite Strahler (60) derart ausgerichtet sind, dass die Strahlung des ersten Strahlers (58) und die Strahlung des zweiten Strahlers (60) zumindest teilweise auf eine identische Position der Deckschicht (40) fallen.

5. Verfahren nach einem der vorhergehenden Ansprüche, **dadurch gekennzeichnet, dass** als Deckschicht (40) ein strahlungshärtender Lack aufgebracht wird.

6. Verfahren nach Anspruch 5, **dadurch gekennzeichnet, dass** der strahlungshärtbare Lack ein Acryllack ist.

7. Verfahren nach einem der vorhergehenden Ansprüche, **dadurch gekennzeichnet, dass** die Deckschicht (40) mit abriebfesten Partikeln versehen wird.

8. Verfahren gemäß einem der vorhergehenden Ansprüche, **dadurch gekennzeichnet, dass** Verfahrensschritt c) zumindest teilweise durch ein Digitaldruckverfahren erfolgt.

9. Verfahren gemäß einem der vorhergehenden Ansprüche, **dadurch gekennzeichnet, dass** Verfahrensschritt b) durch ein Digitaldruckverfahren erfolgt.

10. Verfahren gemäß einem der vorhergehenden Ansprüche, **dadurch gekennzeichnet, dass** der Träger (12) ein Matrixmaterial und ein in dem Matrixmaterial verteiltes Feststoffmaterial aufweist, wobei das Feststoffmaterial zu wenigstens 50 Gew.-%, bezogen auf das Feststoffmaterial durch Talkum gebildet ist, wobei das Matrixmaterial in einer Menge, bezogen auf das Trägermaterial, von ≥ 30 Gew.-% bis ≤ 70 Gew.-% vorliegt und wobei das Feststoffmaterial, bezogen auf das Trägermaterial, in einer Menge, bezogen auf das Trägermaterial, von ≥ 30 Gew.-% bis ≤ 70 Gew.-% vorliegt, und wobei das Matrixmaterial und das Feststoffmaterial gemeinsam, bezogen auf das Trägermaterial, in einer Menge von ≥ 95 Gew.-% vorliegen.

11. Verfahren gemäß Anspruch 10, **dadurch gekennzeichnet, dass** das Matrixmaterial Polypropylen umfasst, wobei das Polypropylen eine Mischung aus einem Homopolymer und einem Copolymer aufweist.

## Claims

1. Method for producing a decorated wall or floor panel (10), comprising the process steps:
a) providing a plate-shaped carrier (12);
b) applying a decoration (32) simulating a decoration template onto at least a partial area of the plate-shaped carrier (12);
c) applying a cover layer (40) onto the decoration (32), wherein the cover layer (40) comprises a radiation curing compound;
d) curing the cover layer (40);
**characterized in that**
the cover layer (40) is cured by use of two directly successive emitters, wherein the first emitter (58) emits radiation with a wavelength which is different compared to radiation from the second emitter (60), wherein the first emitter (58) emits radiation with radiation maxima in a wavelength range of greater than or equal to 395 nm to less than or equal to 445 nm, and wherein the radiation intensity of the first emitter to the radiation intensity of the second emitter is a ratio of greater than or equal to 0.75:1 to less than or equal to 1:0,75.

2. Method according to claim 1, **characterized in that** the second emitter (60) emits radiation with radiation maxima in a wavelength range of greater than or equal to 200 nm to less than or equal to 440 nm.

3. Method according to any one of the preceding claims, **characterized in that** the first emitter (58) and the second emitter (60) are aligned such that the radiation of the first emitter (58) and the radiation of the second emitter (60) are incident at least partially onto different positions of the cover layer (40).

4. Method according to any one of claims 1 or 2, **characterized in that** the first emitter (58) and the second emitter (60) are aligned such that the radiation of the first emitter (58) and the radiation of the second emitter (60) are incident at least partially onto an identical position of the cover layer (40).

5. Method according to any one of the preceding claims, **characterized in that** a radiation curing lacquer is applied as the cover layer (40).

6. Method according to claim 5, **characterized in that** the radiation curable lacquer is an acrylic lacquer.

7. Method according to any one of the preceding claims, **characterized in that** the cover layer (40) is provided with abrasion-resistant particles.

8. Method according to any one of the preceding claims, **characterized in that** process step c) is carried out at least partially by a digital printing process.

9. Method according to any one of the preceding claims, **characterized in that** process step b) is carried out by a digital printing process.

10. Method according to any one of the preceding claims, **characterized in that** the carrier (12) comprises a matrix material and a solid material distributed in the matrix material, wherein the solid material is formed by talc to at least 50 wt.-%, based on the solid material, wherein the matrix material, based on the carrier material, is present in an amount from ≥ 30 wt.-% to ≤ 70 wt.-%, and wherein the solid material, based on the carrier material, is present in an amount from ≥ 30 wt.-% to ≤ 70 wt.-%, and wherein the matrix material and the solid material together, based on the carrier material, are present in an amount of ≥ 95 wt.-%.

11. Method according to claim 10, **characterized in that** the matrix material comprises polypropylene, wherein the polypropylene comprises a mixture of a homopolymer and a copolymer.

## Revendications

1. Procédé de fabrication d'un panneau mural ou de sol (10) décoré présentant les étapes de procédé :
a) la mise en place d'un support en forme de plaque (12),
b) l'application d'un décor (32) reproduisant un modèle de décor sur au moins une région partielle du support en forme de plaque (12),
c) l'application d'une couche de revêtement (40) sur le décor (32), où la couche de revêtement (40) présente un composé durcissant par rayonnement,
d) le durcissement de la couche de revêtement (40),
**caractérisé en ce que** la couche de revêtement (40) est durcie moyennant l'emploi de deux sources de rayonnement se succédant immédiatement, où la première source de rayonnement (58) émet un rayonnement avec une longueur d'onde différente comparativement au rayonnement de la deuxième source de rayonnement (60), où la première source de rayonnement (58) émet un rayonnement avec un maximum de rayonnement dans une plage de longueurs d'ondes égale ou supérieure à 395 nm à inférieure ou égale à 445 nm, où l'intensité du rayonnement de la première source de rayonnement est dans un rapport égal ou supérieur à 0,75/1 à inférieur ou égal à 1/0,75 par rapport à l'intensité du rayonnement de la deuxième source de rayonnement.

2. Procédé selon la revendication 1, **caractérisé en ce que** la deuxième source de rayonnement (60) émet un rayonnement avec un maximum de rayonnement dans une plage de longueurs d'ondes égale ou supérieure à 200 nm à inférieure ou égale à 440 nm.

3. Procédé selon l'une des revendications précédentes, **caractérisé en ce que** la première source de rayonnement (58) et la deuxième source de rayonnement (60) sont orientées de telle manière que le rayonnement de la première source de rayonnement (58) et le rayonnement de la deuxième source de rayonnement (60) tombent au moins partiellement à des positions différentes sur la couche de revêtement (40).

4. Procédé selon l'une des revendications 1 ou 2, **caractérisé en ce que** la première source de rayonnement (58) et la deuxième source de rayonnement (60) sont orientées de telle manière que le rayonnement de la première source de rayonnement (58) et le rayonnement de la deuxième source de rayonnement (60) tombent au moins partiellement à une position identique sur la couche de revêtement (40).

5. Procédé selon l'une des revendications précédentes, **caractérisé en ce qu'**une laque durcissant par rayonnement est appliquée en tant que couche de revêtement (40).

6. Procédé selon la revendication 5, **caractérisé en ce que** la laque durcissable par rayonnement est une laque acrylique.

7. Procédé selon l'une des revendications précédentes, **caractérisé en ce que** la couche de revêtement (40) est pourvue de particules résistantes à l'abrasion.

8. Procédé selon l'une des revendications précédentes, **caractérisé en ce que** l'étape de procédé c) se produit au moins partiellement par un procédé d'impression numérique.

9. Procédé selon l'une des revendications précédentes, **caractérisé en ce que** l'étape de procédé b) se produit par un procédé d'impression numérique.

10. Procédé selon l'une des revendications précédentes, **caractérisé en ce que** le support (12) présente un matériau matriciel et un matériau solide dispersé dans le matériau matriciel, où le matériau solide est formé de talc à au moins 50 % en poids par rapport au matériau solide, où le matériau matriciel est présent dans une quantité de ≥ 30 % en poids à ≤ 70 % en poids par rapport au matériau support et où le matériau solide est présent dans une quantité de ≥ 30 % en poids à ≤ 70 % en poids par rapport au matériau support et où le matériau matriciel et le matériau solide sont présents ensemble dans une quantité ≥ 95 % en poids par rapport au matériau support.

11. Procédé selon la revendication 10, **caractérisé en ce que** le matériau matriciel comprend du polypropylène, où le polypropylène présente un mélange à base d'un homopolymère et d'un copolymère.
